# EUROPÄISCHE PATENTSCHRIFT

(11) **EP 1 541 466 B1**
(45) Veröffentlichungstag und Bekanntmachung des Hinweises auf die Patenterteilung: **16.09.2015**
(21) Anmeldenummer: 04106257.1
(22) Anmeldetag: 03.12.2004
(51) Int. Cl.: B64D 11/06, B64F 5/00

(54) **Verfahren und Vorrichtung für den schnellen Aus- und Einbau von Flugzeugsitzen**
Method and device for the quick attachment and detachment of seats in aircraft
Procédé et dispositif pour le montage et démontage rapide des sièges dans les aéronefs

(30) Priorität: 12.12.2003 DE 10358678
(43) Veröffentlichungstag der Anmeldung: 15.06.2005
(73) Patentinhaber: Lufthansa Technik AG, 22335 Hamburg (DE)
(72) Erfinder: Benz, Bernhard, 67547 Worms (DE); Villanueva, José, 64546 Mörfelden-Walldorf (DE); Marx, Bernhard, 65239 Hochheim (DE)
(74) Vertreter: WSL Patentanwälte Partnerschaft mbB

(56) Entgegenhaltungen:
- EP-A- 0 107 348
- EP-A- 0 779 198
- CA-A1- 2 332 489
- US-A- 3 424 474

## Beschreibung

Die vorliegende Erfindung betrifft ein Verfahren und eine Vorrichtung zum Ein- und Ausbau von Sitzen in Passagierflugzeugen, wobei die Vorrichtung ein Fahrgestell mit Rädern aufweist, welches eine fahrbare Transporteinrichtung darstellt, mit welcher die Sitze, konkret Passagiersitze eines Flugzeuges, aus dem Flugzeug heraus transportiert und wieder hinein transportiert werden können. Entsprechende Verfahren und Vorrichtungen sind im Stand der Technik seit langem bekannt, wobei diese Verfahren und Vorrichtungen sich im wesentlichen auf die Handmontage der Flugzeugsitze, d.h. das Lösen und Befestigen der Sitze vom Boden und das Übernehmen bzw. Herüberheben der Sitze auf einen niedrig gebauten Transportkarren oder dergleichen aufweist, wobei die Sitze dann, auf dem Transportkarren stehend, aus dem Flugzeug heraus und auch wieder hinein transportiert werden können. Ein solches Verfahren funktioniert selbstverständlich nur dann, wenn das Profil der Sitze, gesehen in Transportrichtung, die Breite des Ganges zwischen den Sitzreihen von Passagierflugzeugen nicht übersteigt, wobei noch gewisse Toleranzabstände erforderlich sind, um die Sitze aus einer Sitzreihe heraus und auf die Transportvorrichtung zu heben und gegebenenfalls an den Ausgangstüren eines Flugzeugs aus einem Gang um 90° heraus- oder in diesen einzubiegen.

Ein Verfahren und eine Vorrichtung zum Ein- und Ausbau von Sitzen in Passagierflugzeugen ist aus der CA 2 332 489 bekannt. Nach diesem Verfahren und mit der entsprechenden. Vorrichtung wird zum Ausbau und Transport von Flugzeugsitzen eine Palette in das Flugzeug transportiert, Halterungen auf den Paletten werden mit den Füßen von Sitzen ausgerichtet, sodass die Sitze auf der Palette fixiert werden können und anschließend wird die Palette aus dem Flugzeug heraustransportiert und kann gegebenenfalls auf einem Wagen mit Rädern weitertransportiert werden, wobei die Palette, beispielsweise um die Sitze reparieren und bearbeiten zu können, gegenüber dem Wagen verschwenkbar ist.

Aus der EP 1 07 348 ist eine Vorrichtung zum Warten von Schleudersitzen aus Flugzeugen bekannt, welche auch als Kranvorrichtung dient, sodass über diese Kranvorrichtung ein entsprechender Schleudersitz aus der Kanzel eines Militärflugzeuges herausgehoben werden kann. Die Vorrichtung weist Halterungselemente zum Haltern des Sitzes an seiner Rückwand auf, die gemeinsam mit dem Sitz verschwenkbar sind.

Eine solche Kranvorrichtung ist jedoch für den Ausbau von Sitzen aus einem Passagierflugzeug nicht geeignet, weil Passagierflugzeuge, im Gegensatz zu mit Schleudersitzen ausgestatteten Mili tärflugzeugen, keine oben offene Kanzel aufweisen, aus welcher der Sitz herausgehoben werden könnte.

Aus der US 3,424,474 ist ebenfalls eine Vorrichtung für den Transport von Schleudersitzen bekannt, welche einen Halterungsbügel aufweist, dessen unteres Ende einen Haken zum Untergreifen des Sitzes im Bereich einer Bodenplatte aufweist, jedoch ist diese Vorrichtung nicht für den Ausbau und Einbau von Sitzen ausgelegt und geeignet, sondern lediglich für den Transport und gegebenenfalls die Wartung entsprechender Sitze, wozu eine Halterungseinrichtung verschwenkbar ausgebildet ist.

Ungeachtet teilweise drastisch sinkender Flugpreise sind die Passagiere dennoch an einem maximalen Komfort interessiert und nach wie vor besteht auch Bedarf an Sitzen gehobener Kategorie, für deren Benutzung gegebenenfalls auch höhere Flugpreise bezahlt werden (Business Class bzw. First Class Sitze). Um das verfügbare Sitzangebot eines Flugzeugs dem Bedarf nach preiswerten und/oder höherwertigen Sitzen jederzeit anpassen zu können, ist es erforderich, daß Flugzeugsitze auch während relativ kurzer Zwischenstopps schnell ein- und aufgebaut werden können. Insbesondere ist es bekannt, daß mindestens in einem Übergangsbereich zwischen Sitzen einer höherwertigen und niedrigeren Kategorie in einem Flugzeug bei aufeinanderfolgenden Flügen oder auch vor und nach einem relativ kurzen Zwischenstopp ein unterschiedlicher Bedarf an dem relativen Anteil der jeweiligen Sitzkategorie bestehen kann, so daß dementsprechend das Bedürfnis besteht, relativ schnell beispielsweise die Zahl der Sitze der höherwertigen Kategorie verringern zu können zugunsten der Zahl der Sitze einer niederwertigen Kategorie, oder auch umgekehrf. In diesem Fall ist es, im Gegensatz zu der Situation bei umfassenden Wartungsarbeiten, nicht möglich, beginnend an den Ausgangsbereichen des Flugzeugs jeweils eine Sitzreihe nach der anderen auszubauen, sondern es müssen vielmehr Sitzreihen bzw. Sitze in Bereichen aus- und eingebaut werden, die in einem gewissen Abstand zu dem nächstgelegenen Ausgang liegen, so daß die aus- und einzubauenden Sitze durch den Gang zwischen Sitzreihen transportiert werden müssen. Bekanntermaßen versucht man, den teuren Transportraum eines Flugzeugs optimal auszunutzen, so daß die Gänge zwischen den Sitzreihen im allgemeinen sehr schmal sind. Andererseits sind aber gerade die Sitze einer höherwertigen Kategorie oftmals recht breit, tief und auch hoch, so daß es unter Umständen problematisch sein kann, einen derartigen Sitz durch den Ganz zwischen Sitzreihen zu transportieren. Es ist dann unter Umständen notwendig, diese größeren, platzraubenden Sitze über das Niveau der Rükkenlehnen der Sitzreihen anzuheben, um die Sitze überhaupt transportieren zu können, während die übrigen Sitzreihen zwischen einem Ausgang und den ein- bzw. auszubauenden Sitzen unverändert bleiben.

Dies ist jedoch sehr aufwendig und auch schwierig, da bei den moderneren Sitzkonstruktionen fast immer mehrere Sitze über ein Untergestell und/oder eine Bodenplatte zu einer Einheit miteinander verbunden und dementsprechend schwer sind. Es ist deshalb oftmals nicht möglich, die gewünschte Zahl von Sitzen während eines relativ kurzen Zwischenstopps aus- bzw. einzubauen.

Der vorliegenden Erfindung liegt deshalb die Aufgabe zugrunde, ein Verfahren und eine Vorrichtung für den Aus- und Einbau der Sitze in einem Passagierflugzeug zu schaffen, welche den Aus- und Einbauvorgang erheblich erleichtert und beschleunigt und auch bei relativ großen, ausladenden und schweren Sitzen in relativ einfacher Weise und kurzer Zeit ermöglicht.

Hinsichtlich des entsprechenden Verfahrens wird die der Erfindung zugrundeliegende Aufgabe dadurch gelöst, daß zum Ausbau der Sitze die Transporteinrichtung in den Zwischenraum zwischen zwei hintereinander angeordneten Sitzreihen bewegt und mit der Bodenplatte der Sitze in Eingriff gebracht wird, die Sitzlehnen so weit wie möglich nach hinten geklappt werden und die Bodenplatte mit einer oder mehreren der an der Bodenplatte montierten Sitze angehoben und aus der horizontalen Position heraus gekippt wird, woraufhin die Transporteinrichtung mit den über die Bodenplatte daran gehaltenen Sitzen aus den Sitzreihen heraus und durch den Gang zwischen den Sitzreihen gefahren wird, während zum Einbau die vorstehend beschriebenen Schritte im wesentlichen in umgekehrter Reihenfolge durchlaufen werden. Bezüglich der Reihenfolge der Schritte ist festzuhalten, daß zum Ausbau selbstverständlich zunächst die Transportvorrichtung in den Zwischenraum zwischen zwei hintereinanderliegenden Sitzreihen eingefahren muß und die Halteeinrichtung mit der Bodenplatte in Eingriff gebracht werden muß. Dies kann jedoch sowohl vor als auch nach dem Zurückklappen der Sitzlehnen in eine flachere Position erfolgen.

In der bevorzugten Variante der Erfindung werden, so weit dies möglich ist, die Sitzlehnen in eine vollständig flache bzw. mit dem Sitzabschnitt ausgerichtete Liegeposition gebracht. Es versteht sich, daß etwaige leicht lösbare Verkleidungen, welche die Sitze insgesamt umgreifen oder auch zwischen den Sitzen befindliche Armlehnen und Bedienpulte, die beispielsweise Bedienelemente für die Verstellung der Sitzlehne, Klapptische, Phono-/VideoanschLüsse etc. enthalten, demontiert werden, da diese Elemente in der Regel von den eigentlichen, fest an der Bodenplatte montierten Sitzen leicht abnehmbar sind. Insbesondere entsteht dadurch in vorteilhafter Weise zwischen zwei benachbarten Sitzen oftmals ein Spalt von mindestens 10 cm, oft auch von 20 cm Breite, in die eine Haltevorrichtung in einfacher Weise eingeschwenkt und mit der Bodenplatte in Eingriff gebracht werden kann.

In der bevorzugten Variante des erfindungsgemäßen Verfahrens ist vorgesehen, daß eine Haltevorrichtung für die Bodenplatte der Sitze aus einer gegenüber der Horizontalen geneigten und vorzugsweise im wesentlichen vertikalen Position in eine horizontale Position verschwenkt wird, um die Bodenplatte der Sitze aufzunehmen oder aber beim Einbau diese Bodenplatte auf dem Boden abzusetzen.

Des weiteren sollte zum sicheren Halten der Bodenplatte je eine vordere und eine hintere Kante der Bodenplatte von gegenüberliegenden Klauen einer Halteeinrichtung ergriffen werden, die in der Halteposition fixierbar sind. Es versteht sich, daß der Begriff "Bodenplatte" sehr allgemein zu verstehen ist und nicht etwa nur ideal plattenförmige Elemente umfaßt, sondern ganz allgemein den Teil der Untergestelle von Flugzeugsitzen, der mit entsprechenden Halterungen im Boden fest verriegelt bzw. fest verschraubt ist.

Wie bereits erwähnt, greift die Haltevorrichtung vorzugsweise in einen Spalt zwischen zwei nebeneinander angeordneten Sitzen ein, wobei es sich dementsprechend versteht, daß die Breite der Haltevorrichtung geringer ist als die Breite eine entsprechenden Spaltes, der sich zwischen zwei Sitzen bildet, wenn dazwischen angeordnete Armlehnen und/oder Bedienpulte entfernt werden. Es wäre jedoch grundsätzlich auch denkbar, daß bei Sitzen, bei welchen ein solcher Spalt zwischen benachbarten Sitzen nicht entsteht, die Haltevorrichtung unter den Sitz geschoben und mit der Bodenplatte in Eingriff gebracht wird.

Besonders bevorzugt ist eine Variante der Erfindung, bei welcher die Bodenplatte zum Transport der Sitze in im wesentlichen vertikaler Richtung ausgerichtet wird, mit anderen Worten, die Bodenplatte wird, ausgehend von ihrer Anordnung am Boden, um im wesentlichen 90° geschwenkt. Wenn bei diesem Verfahren auch die Lehnen der Sitze in eine vollständige Liegeposition zu bringen sind, bedeutet dies, daß sowohl die Sitzfläche als auch die Rückenlehnen im wesentlichen parallel zu der Bodenplatte ausgerichtet und damit nach dem Aufrichten der Bodenplatte ebenfalls im wesentlichen vertikal ausgerichtet sind. Auf diese Weise erzielt man ein relativ schmales Transportprofil der Sitze, wenn diese dann mit einer Seite nach vorn durch die Sitzreihe eines Flugzeugs transportiert werden.

Hinsichtlich der Vorrichtung wird für den Ein- und Ausbau von Sitzen in Passagierflugzeugen, welche ein Fahrgestell mit Rädern aufweist, die der Erfindung zugrundeliegende Aufgabe dadurch gelöst, daß die Vorrichtung weiterhin eine Halterungseinrichtung aufweist, die dafür ausgelegt ist, für den Ausbau von Sitzen mit einer Bodenplatte von Sitzen einer Sitzreihe, welche über eine solche Bodenplatte zusammenhängen, in Eingriff gebracht zu werden und so ausgelegt ist, die Bodenplatte zu halten, wobei die Halterungseinrichtung für den Transport der Sitze in eine Position bringbar ist, in welcher die Bodenplatte gegenüber der Horizontalen geneigt, vorzugsweise vertikal ausgerichtet ist.

Vorzugsweise hat dabei das Fahrgestell einen länglich rechteckigen Rahmen und eine entsprechend geformte Platte, auf welchem bzw. auf welcher eine Halterungseinrichtung montiert ist, die im wesentlichen aus einem zumindest während des Transports und des Fahrens zur Horizontalen geneigt ausrichtbaren Schaft aufweist, der zur Aufnahme und zum Ablegen einer Bodenplatte in eine im wesentlichen horizontale, quer über die Bodenplatte verlaufende Position bewegbar ist.

Vorzugsweise sind in einer Ausführungsform der Erfindung an dem Schaft (wenn er quer über die Bodenplatte verläuft) in Richtung der Bodenplatte weisende Klauen angebracht, von denen mindestens eine entlang des Schaftes relativ zu der anderen verschiebbar ist, um so zwischen den Klauen die Bodenplatte der Sitze einklemmen und halten zu können.

Dabei sind die Klauen zweckmäßigerweise so ausgestaltet, daß sie mit einer vorderen bzw. einer hinteren Kante der Bodenplatte in Eingriff bringbar sind, wobei wiederum zu berücksichtigen ist, daß die "Bodenplatte" auch ein nicht unbedingt exakt plattenförmiges Grundgestell sein kann, welches aber auf jeden Fall irgendeinen vorderen Rand oder eine vordere Kante und eine hintere Kante bzw. einen hinteren Rand (gesehen in normaler Sitzrichtung) aufweist, so daß diese Kanten von zwei Klauen erfaßt und die "Bodenplatte" so zwischen den Klauen eingeklemmt werden kann.

Es versteht sich, daß der Schaft und die daran angeordneten Klauen vorzugsweise eine Breite haben, die, für den Fall daß Sitze ergriffen werden sollen, zwischen denen ein entsprechender Spalt vorhanden ist, eine Breite haben, die geringer ist als diese Spaltbreite. Typischerweise beträgt die Breite der Haltevorrichtung und der Klauen weniger als 25 cm, vorzugsweise weniger als 20 cm, aber mehr als 5 cm

In einer Variante der erfindungsgemäßen Vorrichtung ist der Schaft zwischen einer im wesentlichen vertikal ausgerichteten und einer im wesentlichen horizontal ausgerichteten Position verschwenkbar an dem Fahrgestell angeordnet. In einer anderen Variante ist der Schaft starr am Fahrgestell bzw. einer Platte oder einem Rahmen des Fahrgestells angebracht und in der Fahrposition im wesentlichen vertikal ausgerichtet und ist zum Ergreifen bzw. Ablegen der Bodenplatte zusammen mit dem gesamten Fahrgestell verkippbar.

Zu diesem Zweck ist es besonders bevorzugt, wenn das erfindungsgemäße Fahrgestell bzw. der entsprechende, im wesentlichen länglich rechteckige Rahmen entlang einer seiner Längskanten nach unten gerichtete Ausleger aufweist, die beim Verkippen des Fahrgestells mit dem Boden in Eingriff treten und so eine Kippachse für die gesamte Vorrichtung definieren.

Zweckmäßigerweise ist in diesem Fall auch der Schaft nahe am oder im wesentlichen über dieser Längskante des Fahrgestells bzw. Rahmens oder der Platte angeordnet und verläuft so während des Transports im wesentlichen senkrecht bzw. leicht versetzt über der durch die Ausleger definierten Kippachse und nahe einer der Längskanten des Fahrgestells.

Für die Betätigung der Haltevorrichtung ist zweckmäßigerweise ein Hebelmechanismus vorgesehen, dessen Stellungen zwei Endstellungen der Haltevorrichtung entsprechen, wobei eine Endstellung der offenen Position der Haltevorrichtung entspricht, in welcher die Haltevorrichtung mit der Bodenplatte der Sitze außer Eingriff steht und die andere Endstellung eine Position definiert, in welcher die Haltevorrichtung in festem Eingriff mit der Bodenplatte der Sitze ist. Zweckmäßigerweise erfolgt dabei die Hebelbewegung über einen Totpunkt, wobei der Totpunkt in der Nähe der Halteposition angeordnet sein sollte.

Weitere Vorteile, Merkmale und Anwendungsmöglichkeiten der vorliegenden Erfindung werden deutlich anhand der folgenden Beschreibung einer bevorzugten Ausführungsform und der dazu gehörigen Figuren.
- Figur 1: zeigt schematisch einen Flugzeugsitz in einer Sitzposition mit aufgerichteter Rückenlehne,
- Figur 2: zeigt den Sitz nach Figur 1, jedoch mit einer in Liegeposition zurückgeklappten Rückenlehne,
- Figur 3: zeigt eine erfindungsgemäße Transportvorrichtung in einer Halteposition,
- Figur 4: zeigt die Haltevorrichtung aus Figur 3, jedoch in einer offenen Position,
- Figur 5: zeigt eine Seitenansicht einer vor einem bzw. zwei Sitzen angeordnete Transportvorrichtung,
- Figur 6: zeigt die Transportvorrichtung in umgeklapptem Zustand in einer Position zwischen zwei benachbarten Sitzen und
- Figur 7: zeigt die Transportvorrichtung mit dem daran gehaltenen Sitz in einer Transportposition.

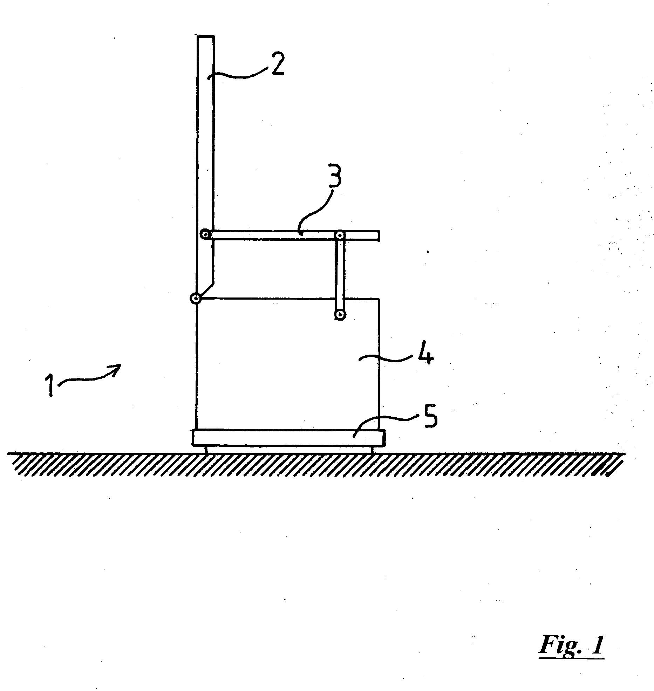

Man erkennt in Figur 1 schematisch in einer Seitenansicht einen Flugzeugsitz 1, bestehend aus einer Bodenplatte 5, die mit am Boden des Flugzeugs fest angebrachten Halterungselementen verriegelbar ist, einen Sitzteil 4, einer Rückenlehne2 und einer Armlehne 3. Es versteht sich, daß der hier dargestellte Sitz in seiner konkreten Form nur grob schematisch wiedergegeben ist und daß selbstverständlich die Rückenlehne leicht geneigt sein kann und auch der Sitz nicht die dargestellte, exakt rechteckig Form hat. Ebenso muß die Bodenplatte keine flache, ebene Platte sein, sondern kann auch ein irgendwie strukturiertes Gestell oder profiliertes Lochblech oder dergleichen sein.

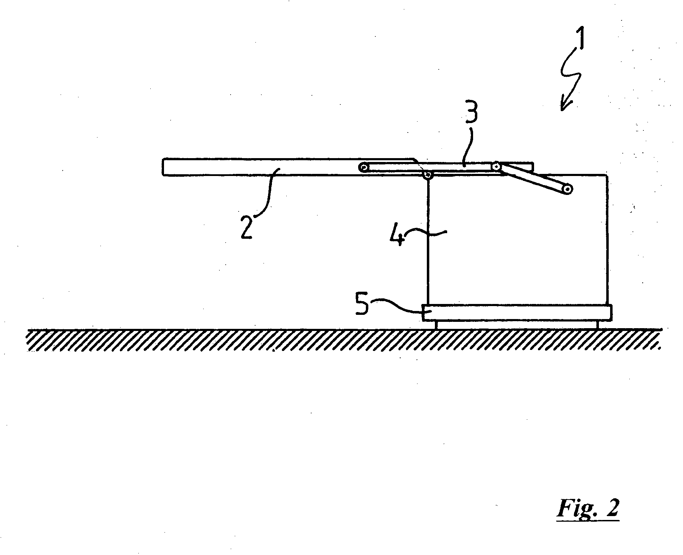

Figur 2 zeigt schematisch denselben Sitz 1, jedoch in einer Position, in welcher die Rückenlehne 2 flach in eine Liegeposition herabgeklappt ist. Eine solche Liegeposition ist zumindest bei manchen Sitzen der höherwertigen Kategorie einstellbar, wobei gerade diese Sitze auch insgesamt größere Abmessungen haben, so daß ihr Transport durch die Sitzreihen von Flugzeugen im allgemeinen schwierig ist.

Im allgemeinen sind zwei derartige Sitze unmittelbar nebeneinander angeordnet und sie können auch eine beide Sitze umhüllende, äußere Verkleidung aufweisen, die aber leicht abnehmbar und getrennt transportierbar ist. Des weiteren ist zwischen zwei derartigen Sitzen im allgemeinen eine etwas breitere (beispielsweise bis zu 20 cm breite) doppelte Armlehne angeordnet, die auch eine Reihe von Bedienelementen für den Sitz und gegebenenfalls auch einen Klapptisch oder dergleichen enthält. Auch diese Lehne zwischen zwei Sitzen kann leicht demontiert werden und wird für den Transport der Sitze entfernt, so daß zwischen den beiden benachbarten Sitzen ein Spalt entsteht, in welchen eine entsprechend ausgestaltete Transportvorrichtung eingreifen kann, um mit der Bodenplatte der Sitze in Eingriff zu kommen.

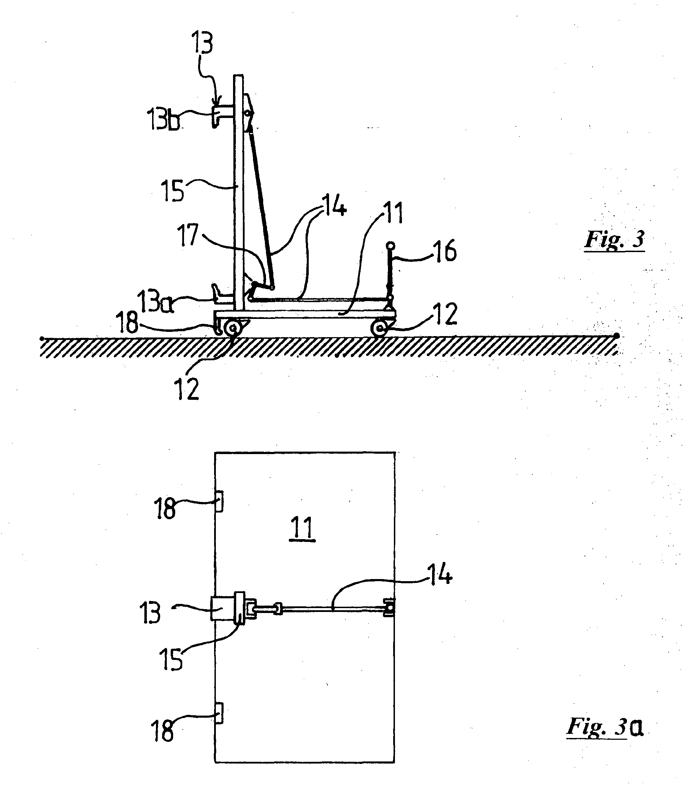

Figur 3 zeigt eine entsprechende Transportvorrichtung in Form eines kleinen Karrens mit einer Grundplatte 11, an deren Unterseite im allgemeinen vier Lenkrollen 12 montiert sind, von denen hier nur zwei sichtbar sind, da der in der Draufsicht der Figur der rechteckig längliche Transportkarren hier nur von seiner Schmalseite her sichtbar ist. In der Nähe der linken Kante der Grundplatte 11 ist ein Schaft 15 montiert, der im wesentlichen senkrecht zu der Grundplatte 11 ausgerichtet ist und fest auf dieser Grundplatte montiert ist. An dem Schaft 15 ist wiederum eine Spannvorrichtung 13 in Form von zwei Klauen 13a, 13b montiert, wobei in diesem Fall die Klaue 13a fest an dem Schaft 15 montiert ist, während die Klaue 13b über ein Gestänge 14 an dem Schaft 15 vertikal verschiebbar ist, so daß der Abstand zwischen den Klauen 13a, 13b verändert werden kann. Diese Abstandsänderung erfolgt mit Hilfe eines Hebel- und Gelenkmechanismus mit dem Gelenkhebel 16 und einem Umlenkhebel 17, wobei der Gestänge- bzw. Hebelmechanismus so ausgebildet ist, daß er zwischen den beiden Endstellungen der Klauen 13a, 13b über einen Totpunkt verläuft und so mindestens die Klemmstellung eine stabile, sich nicht von selbst lösende Stellung ist.

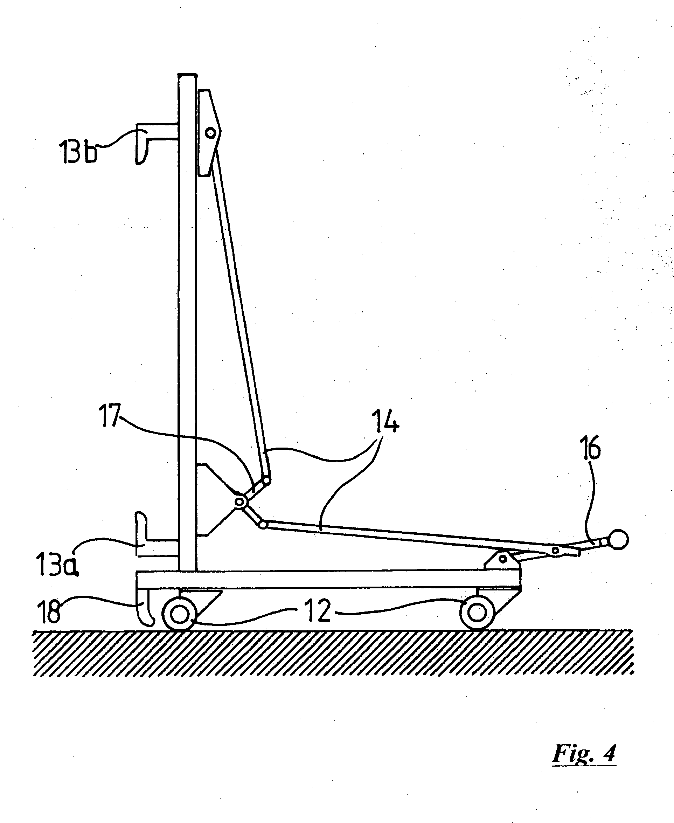

Die Darstellung in Figur 4 ist lediglich schematisch und zeigt nicht die tatsächliche Ausbildung des Gestänge- und Hebelmechanismus. Man erkennt außerdem einen Ausleger 18, welcher an der Längskante der Grundplatte 11 angebracht ist, wobei tatsächlich zwei derartige Ausleger an dieser Längskante der Grundplatte 11 angebracht sind, wie man in einer schematischen Draufsicht gemäß Figur 3a erkennt. In der Draufsicht der Figur 3a sieht man von oben auf die Grundplatte 11 und man erkennt außerdem den Schaft 15 mit der daran montierten oberen Klaue 13b von oben. Figur 4 zeigt nochmals die Transportvorrichtung gemäß Figur 3, in diesem Fall jedoch in einer anderen Position des Hebels 16, die als die offene Position definiert ist, da in dieser Position die obere Klaue 13b einen größeren Abstand von der Klaue 13a hat als in der in Figur 3 dargestellten Halteposition.

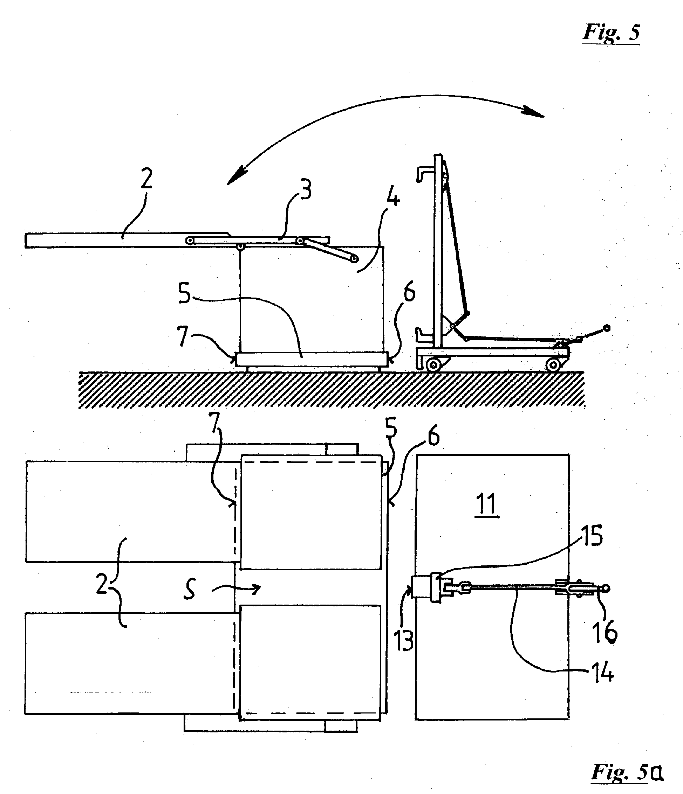

In Figur 5 erkennt man die Transportvorrichtung vor einer Sitzreihe, wobei in Figur 5a die Position des Transportwagens 10 vor den Sitzen 1 nochmals in einer Ansicht von oben dargestellt wird. Wie man insbesondere in Figur 5a erkennt, sind zwei Sitze 1 nebeneinander angeordnet, mit einem Spalt S dazwischen, der breiter ist als die entsprechende Breite des Schaftes 15 und der Klauen 13 der Transportvorrichtung. Die Sitze 1 sind auf der Bodenplatte 5 montiert und ihre Rücklehnen 2 sind in eine Liegeposition heruntergeklappt. Die Armlehnen 3 sind so an den Rückenlehnen 2 befestigt, daß sie beim Zurückklappen der Rückenlehnen ebenfalls abgesenkt werden und mit ihrer Oberkante etwa das Niveau der Sitzhöhe erreichen.

In Figur 5 wird durch einen Doppelpfeil angedeutet, daß die Transportvorrichtung entsprechend verkippt werden kann, wobei beim Anheben der Transportvorrichtung auf der rechten Seite deren linke Kante sich absenkt, so daß die Ausleger 18 mit dem Boden in Berührung kommen und dann eine Kippachse für die gesamte Vorrichtung definieren.

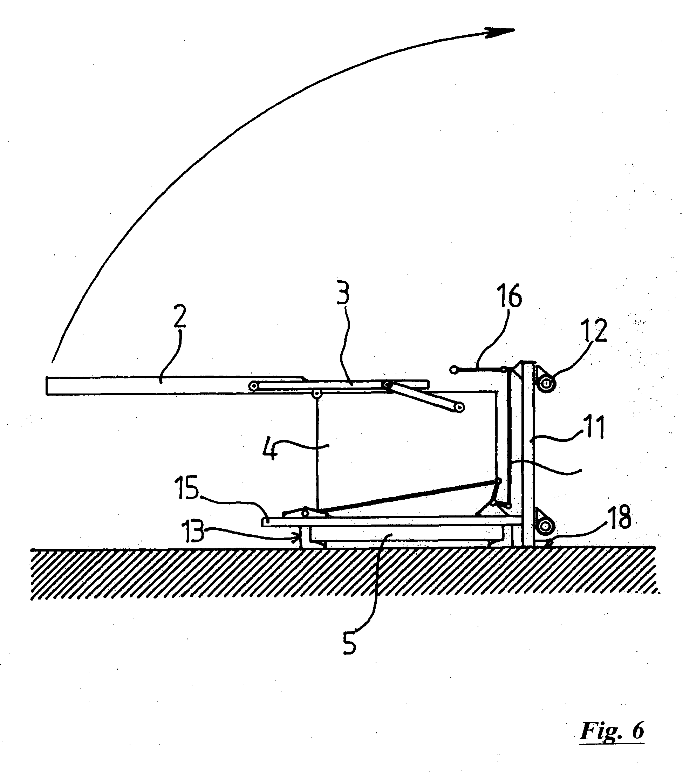

Figur 6 zeigt die Transportvorrichtung 10 in der vollständig umgekippten Position. Der Schaft 15 liegt quer über der Bodenplatte 5, die beiden Klauen 13a, 13b stehen mit der vorderen bzw. hinteren Kante 6, 7der Platte 5 in Eingriff, nachdem der Hebel 16 in die Spannstellung gebracht worden ist. Zum Lösen der Klauen 13, 13b von der Grundplatte bzw. in Eingriff bringen der Klauen 13a, 13b mit der Grundplatte 5 wird der Hebel in die in Figur 5 dargestellte Position umgelegt.

In der in Figur 6 dargestellten Position können nun die Rückenlehnen 2 einfach erfaßt und angehoben werden, wobei die gesamte Transportvorrichtung 10 zusammen mit dem gesamten Sitz 1 wieder in die normale Fahrposition aufgerichtet wird, wobei wieder die beiden Ausleger 18 als Kipplager dienen. Der besondere Vorteil der damit erzielt wird, liegt darin, daß zum einen der Sitz in dieser Form ein besonders schmales Profil hat, was deutlich geringer ist als es sonst der Tiefe des Sitzes in der beispielsweise in Figur 1 dargestellten Position entspricht, also auch die Breite des Transportwagens 10 nicht übersteigt. Der weitere besondere Vorteil liegt darin, daß der Sitz nicht mit irgendwelchen empfindlichen Verkleidungs- oder Polsterteilen auf dem Transportkarren aufsteht, weil diese empfindlichen Teile sonst beschädigt oder verschmutzt werden könnten, zumal der gesamte Sitz zusammen mit dem Grundgestell und der Bodenplatte 5 oft ein beträchtliches Gewicht in der Größenordnung von 80 bis 100 kg aufweisen kann. Die Bodenplatte 5 ist zusammen mit dem entsprechenden Untergestell aber generell dafür ausgelegt, das Gewicht der gesamten Sitzreihe in den Flugzeugrumpf zu übertragen und demzufolge kann über die Bodenplatte 5 auch das Gewicht des gesamten Sitzes problemlos getragen werden und wird über die Klauen und den Schaft 15 auf die Transportvorrichtung bzw. deren Grundplatte 11 und die Räder 12 abgetragen.

Es versteht sich, daß das in Figur 5 dargestellte Verschwenken der Transportvorrichtung in die Halteposition auch vor dem Umlegen der Rücklehnen erfolgen kann.

Des weiteren versteht es sich, daß bei anderen Sitzen, bei welchen die Rückenlehnen nicht vollständig umlegbar sind, sondern nur in eine geneigte Stellung gebracht werden können, es möglicherweise zweckmäßig sein kann, wenn der Schaft oder eine sonstige Halterungsvorrichtung in der Weise geneigt ist, daß auch noch die Bodenplatte in der Transportposition nicht vertikal, sondern gegenüber der Vertikalen geneigt ist, um das Ausladen der nicht vollständig umgelegten Rückenlehnen zu einem gewissen Grad zu kompensieren. Auch die Position des Schaftes 15 kann von der Längskante 19 noch etwas einwärts oder bei Bedarf auch weiter auswärts versetzt werden.

Es kann also durchaus sein, daß für andere Arten von Flugzeugsitzen zwar prinzipiell eine gleiche Verfahrensweise und eine ähnliche Transportvorrichtung verwendet wird, jedoch ist dann unter Umständen der Schaft 15 nicht senkrecht zu der Grundplatte 11 ausgerichtet, sonder verläuft in einer geneigten Stellung und er kann insbesondere auch relativ zu der Grundplatte verschwenkbar sein, um eine optimale Position einstellen zu können. Dabei kann zusätzlich auch die horizontale Position, d.h. der Abstand des Schaftes 15 zu der Kante 19 der Grundplatte 11 bzw. eines entsprechenden Fahrgestells variabel einstellbar sein, wobei zweckmäßigerweise dann auch der gesamte Hebelund Gestängemechanismus zusammen mit dem Schaft auf dem Fahrgestell bzw. der Grundplatte 11 verschiebbar ist.

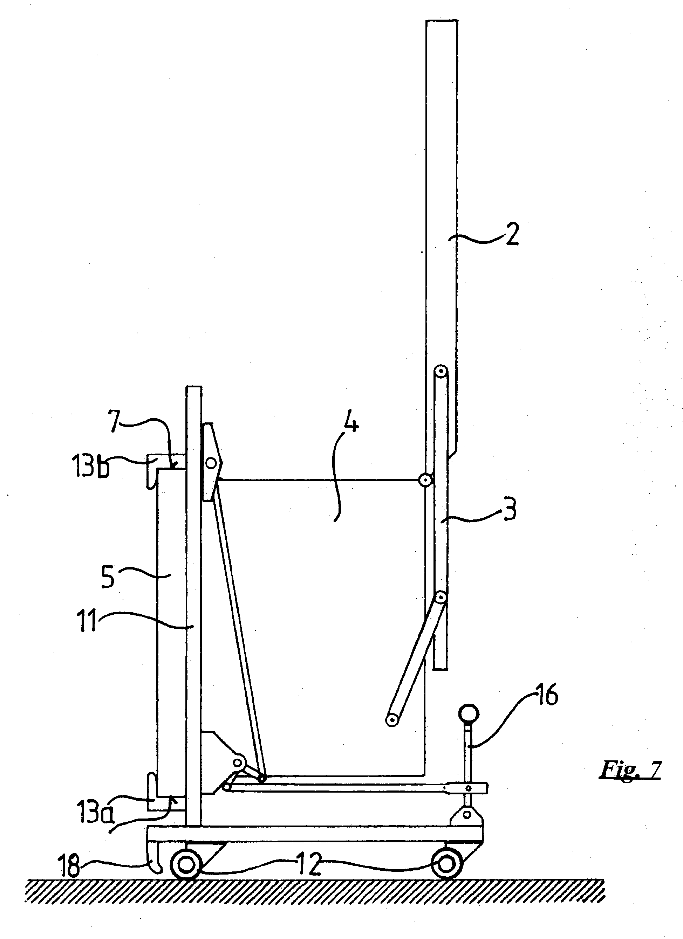

Figur 7 zeigt schließlich die aufgerichtete Transportvorrichtung zusammen mit dem darauf allein über die Grundplatte 5 gehaltenen Sitz 1. Man erkennt in dieser Position besonders deutlich das schmale Transportprofil, welches die Breite der auf die Gangbreite eines Flugzeugs abgestimmten Transportvorrichtung 10 nicht übersteigt.

## Patentansprüche

1. Verfahren zum Ein- und Ausbau von Sitzen (1) in einem Passagierflugzeug mit Hilfe einer auf Rädern (12) fahrenden Transporteinrichtung, **dadurch gekennzeichnet, daß** zum Ausbau der Sitze (1) die Transporteinrichtung in den Zwischenraum zwischen zwei hintereinander angeordnete Sitzreihen hineinbewegt und mit der Bodenplatte (5) einer Sitzreihe in Eingriff gebracht wird, die Sitzlehnen (2) so weit wie möglich nach hinten geklappt werden und die Bodenplatte (5) mit einem oder mehreren an der Bodenplatte (5) montierten Sitzen (1) angehoben und in eine gegenüber der Horizontalen geneigte Position gekippt wird, woraufhin die Transporteinrichtung mit den über die Bodenplatte (5) daran gehaltenen Sitzen (1) aus der Sitzreihe heraus und durch den Gang zwischen den Sitzreihen gefahren werden, während zum Einbau die vorstehend beschriebenen Schritte im wesentlichen in umgekehrter Reihenfolge durchlaufen werden.

2. Verfahren nach Anspruch 1, **dadurch gekennzeichnet, daß** eine Haltevorrichtung für die Bodenplatte (5) der Sitze (1) aus einer gegenüber der Horizontalen geneigten und vorzugsweise im wesentlichen vertikalen Position zum Aufnehmen bzw. Absetzen der Bodenplatte der Sitze (1) in eine im wesentlichen horizontale Position verschwenkt wird.

3. Verfahren nach Anspruch 1 oder 2, **dadurch gekennzeichnet, daß** zum Halten der Bodenplatte (5) je eine vordere und eine hintere Kante (6, 7) der Bodenplatte (5) von gegenüberliegenden Klauen (13a, 13b) einer Halteeinrichtung ergriffen werden.

4. Verfahren nach einem der Ansprüche 1 bis 3, **dadurch gekennzeichnet, daß** die Halteeinrichtung in einen Spalt zwischen zwei nebeneinander angeordneten Sitzen (1) hindurchbewegt wird, um mit der Bodenplatte (5) in- und außer Eingriff zu treten.

5. Verfahren nach einem der Ansprüche 1 bis 4, **dadurch gekennzeichnet, daß** die Bodenplatte (5) zum Transport der Sitze (1) im wesentlichen vertikal ausgerichtet wird.

6. Verfahren nach einem der Ansprüche 1 bis 5, **dadurch gekennzeichnet, daß** die Rücklehnen (2) der Sitze (1) in eine Liegeposition gebracht und die Seitenlehnen (3) der Sitze (1) in Richtung der Sitzfläche abgesenkt werden.

7. Verfahren nach einem der Ansprüche 1 bis 6, **dadurch gekennzeichnet, daß** die Transportvorrichtung (10) zusammen mit daran fest angebrachter Halteeinrichtung verkippt wird, um die Halteeinrichtung mit der Bodenplatte (5) der Sitze (1) in Eingriff zu bringen, die Halteeinrichtung an der Bodenplatte (5) befestigt wird und anschließend über das Ergreifen der zurückgeklappten Sitzlehnen (2) die Transportvorrichtung (10) zusammen mit den über die Halteeinrichtung und die Bodenplatte (5) daran fest angeordneten Sitzen (1) in eine Fahrposition aufgerichtet wird.

8. Vorrichtung zum Ein- und Ausbau von Sitzen (1) in Passagierflugzeugen, wobei die Vorrichtung ein Fahrgestell mit Rädern (12) aufweist, **dadurch gekennzeichnet, daß** die Vorrichtung weiterhin eine Halterungseinrichtung aufweist, die dafür ausgelegt ist, für den Ausbau von Sitzen (1) mit einer Bodenplatte (5) von Sitzen (1) einer Sitzreihe, welche über eine solche Bodenplatte (5) zusammenhängen, in Eingriff gebracht zu werden, und so ausgelegt ist, die Bodenplatte (5) zu halten, wobei die Halterungseinrichtung für den Transport der Sitze (1) in eine Position bewegbar ist, in welcher die Bodenplatte (5) gegenüber der Horizontalen geneigt ist.

9. Vorrichtung nach Anspruch 8, **dadurch gekennzeichnet, daß** das Fahrgestell einen länglich rechteckigen Rahmen und/oder eine länglich rechteckige Platte (11) aufweist, an welchem bzw. welcher die Räder (12) montiert sind und an welchem bzw. welcher die Halterungseinrichtung montiert ist, die im wesentlichen einen zumindest während des Transports von Sitzen (1) geneigt zur Horizontalen ausrichtbaren Schaft (15) aufweist, der zur Aufnahme und zum Ablegen einer Bödenplatte (5) von Sitzen (1) in eine im wesentlichen horizontale, quer über die Bodenplatte (5) verlaufende Position bewegbar ist.

10. Vorrichtung nach Anspruch 9, **dadurch gekennzeichnet, daß** an dem Schaft (15) in Richtung der Bodenplatte (5) weisende Klauen (13a, 13b) angebracht sind, von denen mindestens eine entlang des Schaftes (15) relativ zu der anderen verschiebbar ist, um zwischen den Klauen (13a, 13b) eine Bodenplatte (5) der Sitze (1) einzuklemmen und zu halten.

11. Vorrichtung nach Anspruch 10, **dadurch gekennzeichnet, daß** die Klauen (13a, 13b) in Eingriff mit einer vorderen bzw. einer hinteren Kante (6, 7) der Bodenplatte (5) bringbar sind.

12. Vorrichtung nach einem Ansprüche 9 bis 11, **dadurch gekennzeichnet, daß** der Schaft (15) zwischen einer im wesentlichen vertikalen und einer im wesentlichen horizontalen Position verschwenkbar an dem Fahrgestell angeordnet ist.

13. Vorrichtung nach einem der Ansprüche 9 bis 11, **dadurch gekennzeichnet, daß** der Schaft (15) im wesentlichen starr an dem Fahrgestell bzw. der Bodenplatte (11) angebracht ist und die Bodenplatte (11) bzw. das Fahrgestell gemeinsam aus der Fahrposition in eine Position verkippbar ist, in welcher der Schaft (15) im wesentlichen horizontal und quer über die Bodenplatte (5) einer Sitzreihe ausgerichtet ist.

14. Vorrichtung nach Anspruch 13, **dadurch gekennzeichnet, daß** das Fahrgestell an einer Längskante des Fahrgestells angebrachte, in Richtung des Bodens weisende Auslegerelemente (18) aufweist, die beim Verkippen des Fahrgestells mit dem Boden in Eingriff bringbar sind und eine Kippachse für das Fahrgestell mit der daran angebrachten Haltevorrichtung definieren.

15. Vorrichtung nach einem der Ansprüche 8 bis 14, **dadurch gekennzeichnet, daß** die Haltevorrichtung über einen Hebelmechanismus in eine offene Position und eine Halteposition gebracht werden kann.

## Claims

1. Method for mounting and removing seats (1) in an airplane by means of a transport device running on wheels (12), **characterized in that** for removing the seats (1) the transport device is moved into the space between two rows of seats arranged one behind the other and is engaged with the bottom plate (5) of a row of seats, the seat backrests (2) being reclined as far as possible and the bottom plate (5) being lifted with one or more seats (1) mounted thereon and tilted into a position which is inclined with regard to a horizontal line, whereupon the transport device is moved out of the row of seats and through the corridor between the rows of seats together with the seats (1) supported on said bottom plate (5), while for mounting the seats the above steps are executed substantially in reverse order.

2. Method according to claim 1, **characterized in that** a holding device for the bottom plate (5) of the seats (1) is pivoted from a preferably substantially vertical position which is inclined towards the horizontal line for receiving and settling, respectively, of the bottom plate of the seats (1) into a position which is substantially horizontal.

3. Method according to claim 1 or 2, **characterized in that** for holding the bottom plate (5) each a front edge and a rear edge (6, 7) of the bottom plate (5) are grabbed by oppositely arranged claws (13a, 13b) of a holding device.

4. Method according to any of claims 1 to 3, **characterized in that** the holding device is moved through a gap between two adjacent seats (1) in order to engage and disengage with the bottom plate (5).

5. Method according to any of claims 1 to 4, **characterized in that** the bottom plate (5) for transport of the seats (1) is substantially arranged vertically.

6. Method according to any of claims 1 to 5, **characterized in that** the backrests (2) of the seats (1) are brought into a reclining position and the armrests (3) of the seats (1) are lowered in the direction towards the seating surface.

7. Method according to any of claims 1 to 6, **characterized in that** the transport device (10) together with the holding device fixed thereto is tilted in order to engage the holding device with the bottom plate (5) of the seats, the holding device is mounted to the bottom plate (5) and then the transport device (10) is raised into a driving position together with the seats (1) which are fixed thereto by means of the holding device and the bottom plate (5).

8. Device for mounting and removing seats (1) in airplanes, wherein the device comprises a carriage having wheels (12), **characterized in that** the device further comprises a holding device which is designed to engage a bottom plate (5) of seats (1) in a row of seats, which are connected via such bottom plate (5), in order to remove seats (1) and which is designed to hold the bottom plate (5), wherein for transport of the seats (1), the holding device can be moved into a position, in which the bottom plate (5) is inclined towards the horizontal line.

9. Device according to claim 8, **characterized in that** the carriage comprises an elongated rectangular frame and/or an elongated rectangular plate (11), on which the wheels (12) are mounted and on which the holding device is mounted, which substantially comprises a shaft (15) which during transport of seats (1) can be tilted towards the horizontal line, wherein for receiving and for depositing a bottom plate (5) of seats (1), the shaft (15) is movable into a position which is substantially horizontal and transverse across the bottom plate (5).

10. Device according to claim 9, **characterized in that** claws (13a, 13b) pointing in the direction of the bottom plate (5) are mounted on the shaft (15), of which at least one can be moved relative to the other along the shaft (15), in order to clamp and hold a bottom plate (5) of the seats (1) between the claws (13a, 13b).

11. Device according to claim 10, **characterized in that** the claws (13a, 13b) can be engaged with one of the front or rear edges (6, 7) of the bottom plate (5), respectively.

12. Device according to any of claims 9 to 11, **characterized in that** the shaft (15) is arranged between a substantially vertical and a substantially horizontal position pivotable on the carriage.

13. Device according to any of claims 9 to 11, **characterized in that** the shaft (15) is arranged substantially fixed at the carriage or the bottom plate (11), respectively, and the bottom plate (11) or the carriage, respectively, can be tilted together from the driving position into a position, in which the shaft (15) is aligned substantially horizontally and transverse across the bottom plate (5) of a row of seats.

14. Device according to claim 13, **characterized in that** the carriage comprises cantilever elements (18), which are arranged on a longitudinal edge of the carriage, which cantilever elements point towards the bottom, which can be engaged with the bottom upon tilting the carriage and which define a pivot axis for the carriage with the holding device mounted thereon.

15. Device according to any of claims 8 to 14, **characterized in that** the holding device can be moved into an open position and a holding position by means of a lever mechanism.

## Revendications

1. Procédé de montage et de démontage de sièges (1) dans un avion de ligne à l'aide d'un dispositif de transport mobile sur roues (12), **caractérisé en ce que**, pour le démontage des sièges (1), le dispositif de transport est amené dans l'espace intermédiaire entre deux rangées de sièges disposées l'une derrière l'autre et est solidarisé à la plaque de sol (5) d'une des rangées de sièges, les dossiers des sièges (2) sont rabattus aussi loin que possible vers l'arrière et la plaque de sol (5) est soulevée avec un ou plusieurs sièges (1) montés sur ladite plaque (5) et est basculée dans une position inclinée par rapport à l'horizontale, le dispositif de transport étant ensuite déplacé, avec les sièges (1) maintenus dessus par la plaque de sol (5), hors de la rangée de sièges et déplacé dans le couloir entre les rangées de sièges, tandis que, pour le montage, les étapes précédemment décrites sont exécutées globalement dans l'ordre inverse.

2. Procédé selon la revendication 1, **caractérisé en ce qu'**un dispositif de maintien pour la plaque de sol (5) des sièges (1) est pivoté dans une position inclinée par rapport à l'horizontale et de préférence dans une position globalement verticale pour le logement ou l'abaissement de la plaque de sol des sièges (1) vers une position globalement horizontale.

3. Procédé selon la revendication 1 ou 2, **caractérisé en ce que**, pour le maintien de la plaque de sol (5), des arêtes avant et arrière (6, 7) de la plaque de sol (5) sont maintenues par des griffes opposées (13a, 13b) d'un dispositif de maintien.

4. Procédé selon l'une des revendications 1 à 3, **caractérisé en ce que** le dispositif de maintien est déplacé dans un interstice entre deux sièges (1) disposés l'un à côté de l'autre afin d'être solidarisé ou désolidarisé de la plaque de sol (5).

5. Procédé selon l'une des revendications 1 à 4, **caractérisé en ce que** la plaque de sol (5) est conçue pour le transport des sièges (1) de manière globalement verticale.

6. Procédé selon l'une des revendications 1 à 5, **caractérisé en ce que** les dossiers (2) des sièges (1) sont amenés dans une position couchée et les accoudoirs (3) des sièges (1) sont abaissés en direction de l'assise.

7. Procédé selon l'une des revendications 1 à 6, **caractérisé en ce que** le dispositif de transport (10) est basculé avec le dispositif de maintien qui y est fixé, afin de solidariser le dispositif de maintien avec la plaque de sol (5) des sièges (1), le dispositif de maintien est fixé à la plaque de sol (5) puis, par la préhension des dossiers (2) rabattus, le dispositif de transport (10) est relevé, avec les sièges (1) qui y sont fixés par l'intermédiaire du dispositif de maintien et de la plaque de sol (5), dans une position de déplacement.

8. Dispositif de montage et de démontage de sièges (1) dans des avions de ligne, le dispositif comprenant un châssis avec des roues (12), **caractérisé en ce que** le dispositif comprend en outre un dispositif de support conçu pour être solidarisé, pour le montage de sièges (1), avec une plaque de sol (5) de sièges (1) d'une rangée de sièges, qui sont fixés ensemble par l'intermédiaire de cette plaque de sol (5) et qui est qui conçu pour maintenir la plaque de sol (5), le dispositif de support pouvant être déplacé pour le transport des sièges (1) dans une position dans laquelle la plaque de sol (5) est inclinée par rapport à l'horizontale.

9. Dispositif selon la revendication 8, **caractérisé en ce que** le châssis comprend un cadre oblong rectangulaire et/ou une plaque oblongue rectangulaire (11) sur lequel/laquelle sont montées les roues (12) et sur lequel/laquelle le dispositif de support est monté, qui comprend un axe (15) pouvant être orienté dans une position inclinée par rapport à l'horizontale au moins pendant le transport des sièges (1), qui peut être déplacé, pour le logement et la pose d'une plaque de sol (5) de sièges (1), dans une position globalement horizontale, qui s'étend transversalement au-dessus de la plaque de sol (5).

10. Dispositif selon la revendication 9, **caractérisé en ce que**, sur l'axe (15), sont montées des griffes (13a, 13b) orientées en direction de la plaque de sol (5), dont au moins une est coulissante par rapport à l'autre le long de l'axe (15), afin de maintenir une plaque de sol (5) des sièges (1) coincée entre les griffes (13a, 13b).

11. Dispositif selon la revendication 10, **caractérisé en ce que** les griffes (13a, 13b) peuvent être emboîtées avec une arête avant ou une arête arrière (6, 7) de la plaque de sol (5).

12. Dispositif selon l'une des revendications 9 à 11, **caractérisé en ce que** l'axe (15) est disposé de manière pivotante sur le châssis dans une position globalement verticale ou globalement horizontale.

13. Dispositif selon l'une des revendications 9 à 11, **caractérisé en ce que** l'axe (15) est monté de manière globalement rigide sur le châssis ou la plaque de sol (11) et la plaque de sol (11) ou le châssis peut être basculé(e) de la position de déplacement vers une position dans laquelle l'axe (15) est orienté globalement horizontalement et transversalement au-dessus de la plaque de sol (5) d'une rangée de sièges.

14. Dispositif selon la revendication 13, **caractérisé en ce que** le châssis comprend, au niveau d'une arête longitudinale du châssis, des éléments de flèches (18) orientés en direction du sol, qui, lors du basculement du châssis, sont emboîtés avec le sol et définissent un axe de basculement pour le châssis avec le dispositif de maintien qui y est monté.

15. Dispositif selon l'une des revendications 8 à 14, **caractérisé en ce que** le dispositif de maintien peut être amené, par l'intermédiaire d'un mécanisme à levier, dans une position ouverte et une position de maintien.
